# FASCICULE DE BREVET EUROPEEN

(11) **EP 1 533 880 B1**
(45) Date de publication et mention de la délivrance du brevet: **04.11.2009**
(21) Numéro de dépôt: 04354031.9
(22) Date de dépôt: 07.09.2004
(51) Int. Cl.: H02H 3/33

(54) **Dispositif et procédé de protection différentielle et appareil électrique comportant un tel dispositif**
Einrichtung und Verfahren für den Differentialschutz und elektrisches Gerät mit solcher Einrichtung
Device and method for the differential protection and electrical apparatus including such a device

(30) Priorité: 18.11.2003 FR 0313504
(43) Date de publication de la demande: 25.05.2005
(73) Titulaire: Schneider Electric Industries SAS, 92500 Rueil-Malmaison (FR)
(72) Inventeur: Tian, Simon, Schneider Electric Industries SAS, 38050 Grenoble cedex 09 (FR); Blanc, Patrick, Schneider Electric Industries SAS, 38050 Grenoble cedex 09 (FR); Beranger, Bruno, Schneider Electric Industries SAS, 38050 Grenoble cedex 09 (FR); Fernandez, Eric, Schneider Electric Industries SAS, 38050 Grenoble cedex 09 (FR)
(74) Mandataire: Tripodi, Paul

(56) Documents cités:
- EP-A- 0 812 048
- EP-A- 0 866 536
- DE-A- 19 634 438
- FR-A- 2 824 951

## Description

### DOMAINE TECHNIQUE

L'invention concerne un dispositif de protection différentielle selon le préambule de la revendication 1.

L'invention concerne aussi un appareil électrique de protection différentielle selon le préambule de la revendication 8.

L'invention concerne aussi un procédé de protection différentielle selon le préambule de la revendication 9.

### ETAT DE LA TECHNIQUE

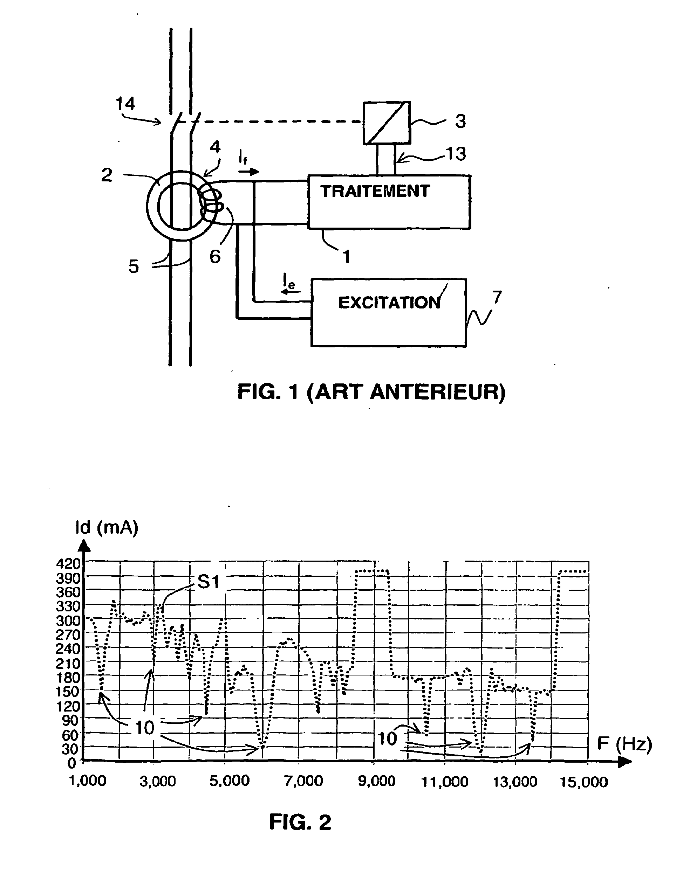

Des appareils électriques comportant des dispositifs de protection différentielle connus, tel que celui représenté sur la figure 1, comportent une unité de traitement 1 connectée à un transformateur 2 de mesure de courant différentiel et à un relais de déclenchement 3. Le transformateur de mesure a généralement un circuit magnétique 4 en forme de tore entourant des conducteurs principaux 5 d'une ligne à protéger et comporte au moins un détection comportent un circuit d'excitation 7 pour exciter le circuit magnétique avec un courant périodique le de fréquence d'excitation prédéterminé. Un courant de défaut différentiel crée un décalage ou une dissymétrie du cycle magnétisation du circuit magnétique qui génère un signal If représentatif d'un courant de défaut différentiel détecté par l'unité de traitement. Si le signal représentatif de courant de défaut différentiel If dépasse un seuil, l'unité de traitement fournit un signal 13 de déclenchement au relais 3 pour provoquer l'ouverture de contacts principaux 14 disposés en série avec les conducteurs 5. De tels dispositifs sont décrits dans le brevet US 5,195,008 et dans la demande de brevet EP 0 866 536.

Dans certains dispositifs, l'unité de traitement utilise une variation de rapport cyclique pour détecter une valeur de courant de défaut. Par exemple, un brevet EP035634B1 divulgue un dispositif de protection différentiel sensible à un courant de défaut différentiel alternatif, continu ou périodique. Dans ce document, le dépassement de la saturation du circuit magnétique permet de détecter un courant de défaut par variation de rapport cyclique. Une demande de brevet EP1260821, décrit aussi un dispositif utilisant la variation d'un rapport cyclique pour détecter un courant de défaut différentiel.

Dans d'autres dispositifs de protection différentielle, l'unité de traitement utilise un courant de compensation injecté notamment dans un enroulement de compensation du transformateur de mesure pour compenser un courant de défaut. Un tel dispositif est décrit dans le brevet US4276510. Dans ce cas, puisque le courant de compensation est proportionnel au courant de défaut, un signal proportionnel au courant de compensation est utilisé pour le traitement du déclenchement

Lorsque le signal à mesurer est un signal alternatif présentant des signaux harmoniques, la fréquence d'excitation doit être élevée, au moins le double de la fréquence du plus haut harmonique à mesurer. A ces fréquences, le seuil de déclenchement peut être supérieur au seuil normal de déclenchement.

Cependant, le signal de défaut peut atteindre des fréquences supérieures à celle des harmoniques à mesurer. Dans ce cas, il est possible que des déclenchements indésirables se produisent vers des fréquences de valeurs multiples de la fréquence d'excitation. Ces déclenchements peuvent se représenter par des valeurs de déclenchements trop basses par rapport à des seuils acceptables à ces fréquences.

### EXPOSE DE L'INVENTION

L'invention a pour but un dispositif et un procédé de protection différentielle évitant des déclenchements indésirables pour certaines fréquences de courant de défaut et un appareil électrique comportant un tel dispositif, ledit signal de déclenchement étant fourni lorsque ledit signal représentatif d'un défaut différentiel dépasse au moins un seuil prédéterminé pendant l'excitation par ladite première fréquence et pendant l'excitation par ladite seconde fréquence.

Un dispositif de protection différentielle selon l'invention comporte des moyens de contrôle de la fréquence d'excitation pour contrôler et changer la fréquence d'excitation et pour fournir ledit signal d'excitation du circuit magnétique avec au moins une seconde fréquence d'excitation différente de la première fréquence d'excitation.

Selon l'invention, les moyens de contrôle de la fréquence excitation changent de fréquence d'excitation et l'unité de traitement fournit un signal de déclenchement si au moins un seuil de déclenchement est dépassé avec un signal d'excitation ayant consécutivement une première fréquence puis une seconde fréquence d'excitation.

Avantageusement, les moyens de contrôle de la fréquence d'excitation changent de fréquence d'excitation et l'unité de traitement fournit un signal de déclenchement si un premier seuil de déclenchement est dépassé avec un signal d'excitation ayant une première fréquence et un second seuil de déclenchement est dépassé avec un signal d'excitation ayant une seconde fréquence d'excitation.

Selon une première variante, les moyens de contrôle de la fréquence d'excitation changent périodiquement de fréquence d'excitation.

Selon une seconde variante, l'unité de traitement comporte des moyens de contrôle du déclenchement pour commander les moyens de contrôle de la fréquence et pour changer la fréquence d'excitation de la première fréquence vers la seconde fréquence d'excitation lorsque ledit signal de défaut différentiel dépasse un seuil de déclenchement avec un signal d'excitation à la première fréquence d'excitation, un signal de déclenchement étant fourni si le signal de défaut différentiel dépasse un seuil avec un signal d'excitation à la seconde fréquence d'excitation.

De préférence, la première et la seconde fréquences d'excitation ont des valeurs entre 2 kilohertz et 10 kilohertz. Avantageusement, la première fréquence d'excitation a une valeur de 3 kilohertz et la seconde fréquence d'excitation a une valeur de 4,4 kilohertz.

Un appareil électrique de protection différentielle selon l'invention est décrit dans la revendication 8.

Un procédé de protection différentielle est réalisé selon la revendication 9.

Avantageusement, la seconde étape de traitement et la seconde étape de détection sont effectuées si un défaut est détecté à la première étape de détection.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma block d'un dispositif de protection différentielle connu ;
- la figure 2 représente un exemple de courbe de valeurs de déclenchement en fonction de la fréquence pour une fréquence d'excitation ;
- la figure 3 représente un schéma block d'un dispositif de protection différentielle selon un premier mode de réalisation de l'invention ;
- les figures 4 à 6 représentent des exemples de courbes de valeurs de déclenchement en fonction de la fréquence pour deux fréquences d'excitation ;
- la figure 7 représente un schéma block d'un dispositif de protection différentielle selon un second mode de réalisation de l'invention ;
- la figure 8 représente un organigramme montrant un exemple de procédé selon l'invention.

### DESCRIPTION DETAILLEE DE MODES DE REALISATION PREFERES

Dans un dispositif de la figure 1, un signal de défaut peut, par exemple, avoir une fréquence fondamentale de 50 ou 60 Hz et être mesuré avec une fréquence d'excitation de 1500 Hz. Dans ce cas, des fréquences jusqu'à l'harmonique 15 soit 750 Hz d'un signal de défaut à 50 Hz peuvent être correctement mesurés ou détectés. Au-delà, de cette fréquence de 750 Hz, des phénomènes de résonance risquent de provoquer des déclenchements indésirables.

La figure 2 montre un exemple de courbe S1 valeurs de courant différentiel de déclenchement en fonction de la fréquence. Sur cette figure la courbe S1 montre des creux 10 de valeurs qui augmentent la sensibilité du dispositif et peuvent provoquer des déclenchements indésirables à certaines fréquences de résonance de signal ou d'harmoniques.

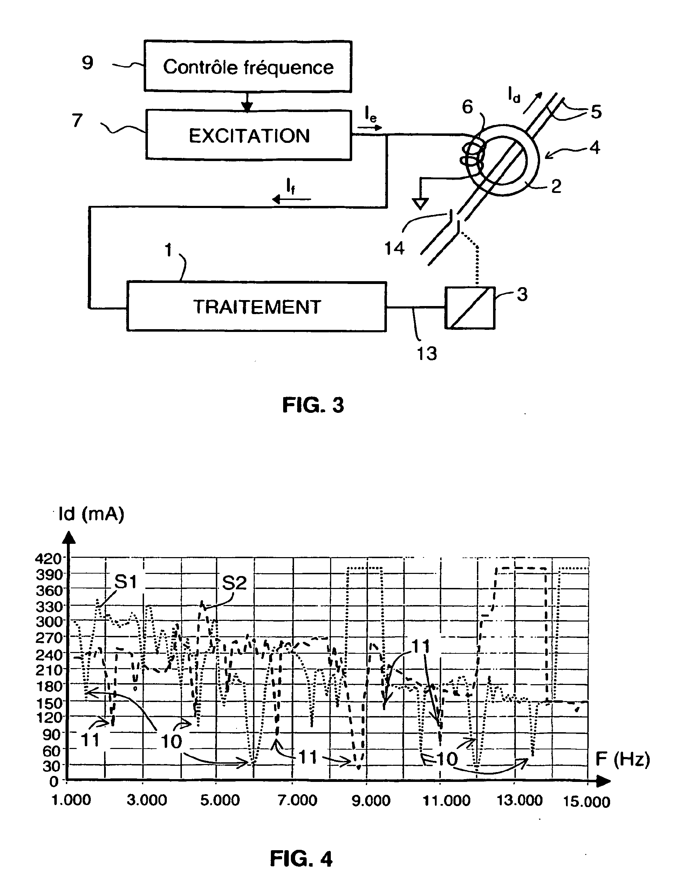

Pour éviter des risques de déclenchement indésirables, un dispositif selon un mode de réalisation de l'invention représenté sur la figure 3 comporte un circuit de contrôle 9 connecté au circuit d'excitation pour contrôler et changer la fréquence d'excitation. Le circuit de contrôle 9 commande le circuit d'excitation pour fournir un signal d'excitation du circuit magnétique avec une fréquence différente de la première fréquence d'excitation.

En changeant de fréquence d'excitation, les creux 10 de la courbe S1 de valeurs de déclenchement correspondant à une première fréquence d'excitation F1 n'ont pas d'effets avec une seconde fréquence d'excitation. La figure 4 montre des exemples de courbes de valeurs de déclenchement S1 et S2 en fonction de la fréquence. Ces courbes S1 et S2 correspondent respectivement à la première fréquence d'excitation F1 et à la seconde fréquence d'excitation F2. Avec une seconde fréquence d'excitation, des ceux 11 apparaissent dans la seconde courbe S2, mais ils n'influencent pas le déclenchement.

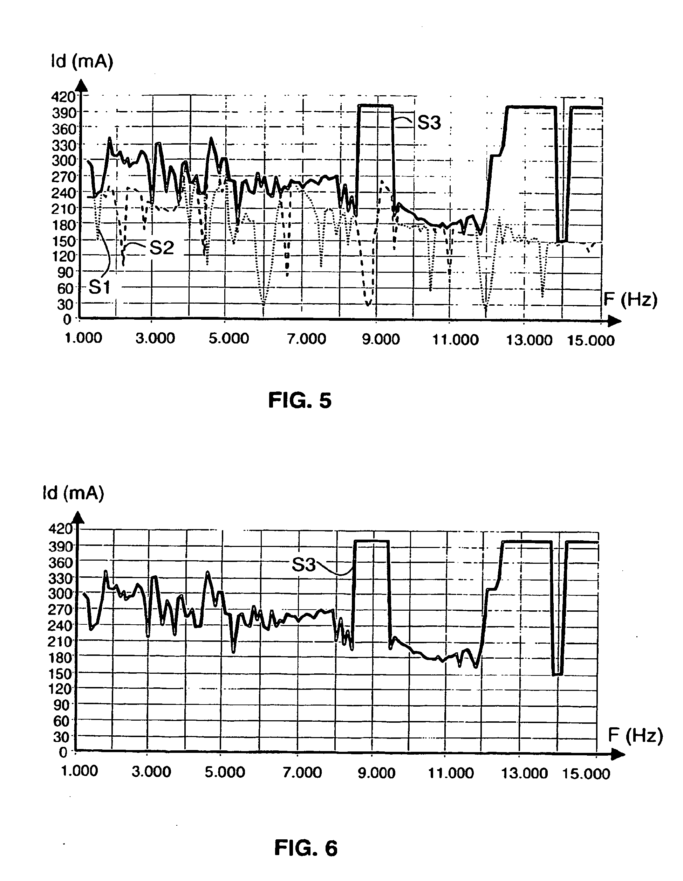

Les figures 5 et 6, montre une courbe S3 montrant le maximum des valeurs de déclenchement des signaux S1 et S2. Les creux de sensibilité pouvant déclencher des déclenchements indésirables ne sont plus présents.

Ainsi, pour éviter des déclenchements indésirables le circuit de contrôle 9 de la fréquence d'excitation change de fréquence d'excitation pour que l'unité de traitement fournisse un signal de déclenchement si au moins un seuil de déclenchement est dépassé avec un signal d'excitation ayant consécutivement une première fréquence F1 puis une seconde fréquence d'excitation F2.

Dans un autre mode de réalisation, l'unité de traitement peut comporter deux seuils SD1 et SD2. Ainsi, le circuit de contrôle 9 de la fréquence d'excitation change de fréquence d'excitation pour que l'unité de traitement fournisse un signal de déclenchement si un premier seuil de déclenchement SD1 est dépassé avec un signal d'excitation ayant une première fréquence F1 et si un second seuil de déclenchement SD2 est dépassé avec un signal d'excitation ayant une seconde fréquence F2.

Par exemple, Ainsi, le circuit de contrôle 9 de la fréquence d'excitation peut changer périodiquement de fréquence d'excitation.

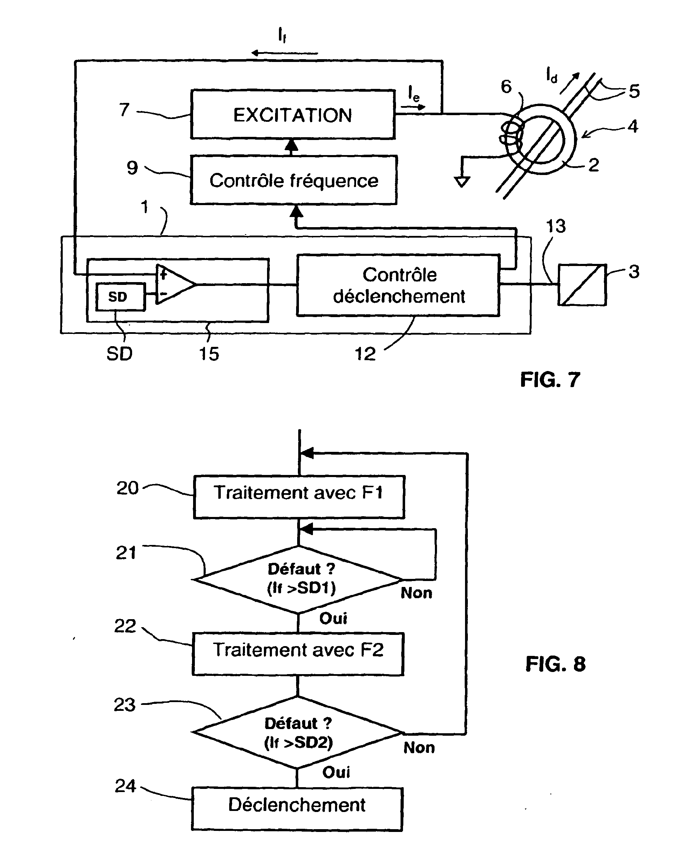

Dans un mode de réalisation représenté sur la figure 7, l'unité de traitement 1 comporte un circuit 12 de contrôle de déclenchement connecté au circuit 9 de contrôle de fréquence pour commander le changement de fréquence d'excitation de la première fréquence d'excitation F1 vers la seconde fréquence d'excitation F2 lorsque ledit signal de défaut différentiel dépasse un seuil de déclenchement SD avec un signal d'excitation à la première fréquence d'excitation F1, un signal de déclenchement étant fourni si le signal de défaut différentiel If dépasse le seuil SD avec un signal d'excitation à la seconde fréquence d'excitation F2. Le dépassement de seuil peut être effectué par un module de comparaison 15. Il est aussi possible de d'utiliser deux seuils de déclenchement. Dans ce cas, il y a un changement de fréquence lorsque le signal If dépasse un premier seuil de déclenchement SD1 avec un signal d'excitation à la première fréquence d'excitation F1, et un signal de déclenchement est fourni si le signal de défaut différentiel If dépasse un second seuil SD2 avec un signal d'excitation à la seconde fréquence d'excitation F2.

Par exemple, la première et la seconde fréquence ont des valeurs comprises entre 2 kilohertz et 10 kilohertz. Avantageusement, la première fréquence d'excitation a une valeur de 3 kilohertz et la seconde fréquence d'excitation a une valeur de 4,4 kilohertz.

Un procédé de protection différentiel selon un mode réalisation de l'invention peut être représenté par un organigramme comme celui de la figure 8. Dans ce procédé, à une première étape de traitement 20 une première fréquence d'excitation F1 est sélectionnée pour exciter un circuit magnétique 4 d'un transformateur 2 de mesure de courant différentiel de défaut Id. Puis, à une première étape 21 de détection de défaut, un signal If de courant différentiel extrait par excitation à la dite première fréquence est comparé à un seuil. Si un défaut est détecté à l'étape 21, une seconde étape 22 de traitement permet de sélectionner une seconde fréquence d'excitation F2 pour exciter le circuit magnétique 4 du transformateur 2 de mesure de courant différentiel de défaut. Puis, à une seconde étape 23 de détection de défaut, le signal de courant différentiel If extrait par excitation à la dite seconde fréquence est comparer à un seuil. Enfin, une étape de déclenchement 24 fournit un signal de déclenchement si un défaut est détecté à la première et à la seconde étapes de détection 21 et 23.

De préférence, la seconde étape de traitement 22 et la seconde étape de détection 23 sont effectuées si un défaut est détecté à la première étape de détection 21. Cependant, ces étapes 22 et 23 peuvent aussi être effectuées de manière cyclique avec les étapes 20 et 21. Lors des étapes 21 et 24, le signal If de courant différentiel peut être comparé à un même seuil SD ou à des seuils différents SD1 et SD2.

Dans les modes de réalisation décrits ci-dessus la seconde fréquence F2 peut concerner une ou plusieurs fréquences supplémentaires en plus de la première fréquence F1.

Les appareils électriques selon l'invention peuvent êtres notamment des interrupteurs différentiels ou des disjoncteurs comportant une fonction différentielle.

## Revendications

1. Dispositif de protection différentielle comportant :
- une unité de traitement (1) comportant une entrée pour recevoir un signal représentatif d'un défaut différentiel (If) fourni par un transformateur de mesure (2) de courant différentiel et une sortie pour fournir un signal de déclenchement (13) à un relais de déclenchement (3) lorsque ledit signal représentatif d'un défaut différentiel dépasse un seuil prédéterminé, et
- un circuit d'excitation (7) pour exciter un circuit magnétique (4) du transformateur de mesure (2) de courant différentiel avec un signal d'excitation (le) à une première fréquence excitation (F1),
dispositif **caractérisé en ce qu'**il comporte des moyens de contrôle (9) de la fréquence d'excitation pour contrôler et changer la fréquence d'excitation et pour fournir ledit signal d'excitation (le) du circuit magnétique avec au moins une seconde fréquence d'excitation (F2) différente de la première fréquence d'excitation (F1), ledit signal de déclenchement étant fourni lorsque ledit signal représentatif d'un défaut différentiel dépasse au moins un seuil prédéterminé pendant l'excitation consécutivement par ladite première fréquence et puis pendant l'excitation par ladite seconde fréquence.

2. Dispositif selon la revendication 1 **caractérisé en ce que** les moyens de contrôle (9) de la fréquence d'excitation changent de fréquence d'excitation et l'unité de traitement fournit un signal de déclenchement si au moins un seuil de déclenchement est dépassé avec un signal d'excitation ayant consécutivement une première fréquence (F1) puis une seconde fréquence (F2) d'excitation.

3. Dispositif selon l'une des revendications 1 ou 2 **caractérisé en ce que** les moyens de contrôle (9) de la fréquences d'excitation changent de fréquence d'excitation et l'unité de traitement (1) fournit un signal de déclenchement (13) si un premier seuil de déclenchement (SD1) est dépassé avec un signal d'excitation ayant une première fréquence (F1) et un second seuil de déclenchement (SD2) est dépassé avec un signal d'excitation ayant une seconde fréquence d'excitation (F2).

4. Dispositif selon l'une quelconque des revendications 1 à 3 **caractérisé en ce que** les moyens de contrôle (9) de la fréquence d'excitation changent périodiquement de fréquence d'excitation (F1, F2).

5. Dispositif selon l'une quelconque des revendications 1 à 3 **caractérisé en ce que** l'unité de traitement comporte des moyens de contrôle du déclenchement (12) pour commander les moyens de contrôle (9) de la fréquence et pour changer la fréquence d'excitation de la première fréquence (F1) vers la seconde fréquence (F2) d'excitation lorsque ledit signal de défaut différentiel (Id) dépasse un seuil de déclenchement (SD, SD1) avec un signal d'excitation à la première fréquence d'excitation (F1), un signal de déclenchement (13) étant fourni si le signal de défaut différentiel (Id) dépasse un seuil (SD, SD2) avec un signal d'excitation à la seconde fréquence d'excitation (F2).

6. Dispositif selon l'une quelconque des revendications 1 à 5 **caractérisé en ce que** la première et la seconde fréquences d'excitation (F1, F2) ont des valeurs entre 2 kilohertz et 10 kilohertz.

7. Dispositif selon la revendication 6 **caractérisé en ce que** la première fréquence d'excitation (F1) a une valeur de 3 kilohertz et la seconde fréquence d'excitation (F2) a une valeur de 4,4 kilohertz.

8. Appareil électrique de protection différentielle comportant :
- un transformateur (2) de mesure de courant de défaut différentiel comportant un enroulement secondaire (6),
- des contacts principaux (14) connectés à des conducteurs principaux (5) constituant un enroulement primaire dudit transformateur de mesure,
- un relais de déclenchements (3) de l'ouverture des contacts principaux, et
- un dispositif de protection différentielle selon l'une quelconque des revendications 1 à 7 ayant une unité de traitement (1) avec une entré connectée au transformateur de mesure (2) de courant différentiel et une sortie connectée au relais de déclenchement (3) pour fournir le signal de déclenchement (13), et un circuit d'excitation (7) connecté à un enroulement (6) du transformateur de mesure pour fournir un signal d'excitation (Ie) à une première fréquence d'excitation (F1) **caractérisé en ce que** le circuit d'excitation comporte des moyens pour fournir ledit signal d'excitation à une seconde fréquence d'excitation (F2), ledit signal de déclenchement étant fourni lorsque ledit signal représentatif d'un défaut différentiel dépasse au moins un seuil prédéterminé pendant l'excitation consécutivement par ladite première fréquence et puis pendant l'excitation par ladite seconde fréquence.

9. Procédé de protection différentielle avec un dispositif selon la revendication 1 **caractérisé en ce qu'**il comporte :
- une première étape de traitement (20) sélectionnant une première fréquence d'excitation (F1) pour exciter un circuit magnétique (4) d'un transformateur (2) de mesure de courant différentiel de défaut (Id),
- une première étape de détection (21) de défaut dans laquelle un signal de courant différentiel (If) extrait par excitation à la dite première fréquence est comparé à un seuil prédéterminé,
- une seconde étape de traitement (22) sélectionnant au moins une seconde fréquence d'excitation (F2) pour exciter le circuit magnétique (4) du transformateur (2) de mesure de courant différentiel de défaut (Id),
- une seconde étape de détection (23) de défaut dans laquelle un signal de courant différentiel (If) extrait par excitation à la dite seconde fréquence est comparé à un seuil, et
- une étape de déclenchement (24) pour fournir un signal de déclenchement (13) si un, défaut est détecté à la première (21) et puis à la seconde (23) étapes de détection, par le dépassement dudit seuil prédéterminé.

10. Procédé selon la revendication 9 **caractérisé en ce que** la seconde étape de traitement (22) et la seconde étape de détection (23) sont effectuées si un défaut est détecté à la première étape de détection (21).

## Claims

1. A differential protection device comprising:
- a processing unit (1) comprising an input to receive a signal representative of a differential fault (If) supplied by a differential current measuring transformer (2) and an output to supply a tripping signal (13) to a trip relay (3) when said signal representative of a differential fault exceeds a preset threshold, and
- an excitation circuit (7) to excite a magnetic circuit (4) of the differential current measuring transformer (2) with an excitation signal (Ie) at a first excitation frequency (F1), a device **characterized in that** it comprises excitation frequency control means (9) to control and change the excitation frequency and to supply said magnetic circuit excitation signal (Ie) with at least a second excitation frequency (F2) different from the first excitation frequency (F1), said tripping signal being supplied when said signal representative of a differential fault exceeds at least one preset threshold during excitation consecutively by said first frequency and then during excitation by said second frequency.

2. The device according to claim 1 **characterized in that** the excitation frequency control means (9) change excitation frequency and the processing unit supplies a tripping signal if at least one tripping threshold is exceeded with an excitation signal consecutively having a first excitation frequency (F1) and then a second excitation frequency (F2).

3. The device according to either one of claims 1 or 2 **characterized in that** the excitation frequency control means (9) change excitation frequency and the processing unit (1) supplies a tripping signal (13) if a first tripping threshold (SD1) is exceeded with an excitation signal having a first frequency (F1) and a second tripping threshold (SD2) is exceeded with an excitation signal having a second excitation frequency (F2).

4. The device according to any one of claims 1 to 3 **characterized in that** the excitation frequency control means (9) change excitation frequency (F1, F2) periodically.

5. The device according to any one of claims 1 to 3 **characterized in that** the processing unit comprises tripping control means (12) to command the frequency control means (9) and to change the excitation frequency from the first excitation frequency (F1) to the second excitation frequency (F2) when said differential fault signal (Id) exceeds a tripping threshold (SD, SD1) with an excitation signal at the first excitation frequency (F1), a tripping signal (13) being supplied if the differential fault signal (Id) exceeds a threshold (SD, SD2) with an excitation signal at the second excitation frequency (F2).

6. The device according to any one of claims 1 to 5 **characterized in that** the first and second excitation frequencies (F1, F2) have values between 2 kilohertz and 10 kilohertz.

7. The device according to claim 6 **characterized in that** the first excitation frequency (F1) has a value of 3 kilohertz and the second excitation frequency (F2) has a value of 4.4 kilohertz.

8. An electrical differential protection apparatus comprising:
- a differential fault current measuring transformer (2) comprising a secondary winding (6),
- main contacts (14) connected to main conductors (5) constituting a primary winding of said measuring transformer,
- a trip relay (3) for opening the main contacts, and
- a differential protection device according to any one of claims 1 to 7 having a processing unit (1) with an input connected to the differential fault current measuring transformer (2) and an output connected to the trip relay (3) to supply the tripping signal (13), and an excitation circuit (7) connected to a winding (6) of the measuring transformer to supply an excitation signal (Ie) at a first excitation frequency (F1), **characterized in that** the excitation circuit comprises means for supplying said excitation signal at a second excitation frequency (F2), said tripping signal being supplied when said signal representative of a differential fault exceeds at least one threshold during excitation consecutively by said first frequency and then during excitation by said second frequency.

9. A differential protection method with a device according to claim 1 **characterized in that** it comprises:
- a first processing step (20) selecting a first excitation frequency (F1) to excite a magnetic circuit (4) of a measuring transformer (2) measuring differential fault current (Id),
- a first fault detection step (21) in which a differential current signal (1f) extracted by excitation at said first frequency is compared with a preset threshold,
- a second processing step (22) selecting at least a second excitation frequency (F2) to excite the magnetic circuit (4) of the measuring transformer (2) measuring differential fault current (Id),
- a second fault detection step (23) in which a differential current signal (If) extracted by excitation at said second frequency is compared with a threshold, and
- a tripping step (24) to supply a tripping signal (13) if a fault is detected in the first detection step (21) and then in the second detection step (23) by said preset threshold being exceeded.

10. The method according to claim 9 **characterized in that** the second processing step (22) and the second detection step (23) are performed if a fault is detected in the first detection step (21).

## Patentansprüche

1. Differenzstrom-Schutzeinrichtung mit
- einer Verarbeitungseinheit (1), die einen Eingang zur Aufnahme eines, von einem Differenzfehlerstrom-Messwandler (2) gelieferten, einen Differenzfehlerstrom (If) abbildenden Signals sowie einen Ausgang umfasst, der dazu dient, ein Auslösesignal (13) an ein Auslöserelais (3) liefern, wenn das genannte, einen Differenzfehlerstrom abbildende Signal einen bestimmten Schwellwert überschreitet, und
- einer Erregerschaltung (7), die dazu dient, einen Magnetkreis (4) des Differenzstrom-Messwandlers (2) durch ein Erregersignal (Ie) mit einer ersten Erregerfrequenz (F1) zu beaufschlagen,
welche Einrichtung **dadurch gekennzeichnet ist, dass** sie Steuermittel (9) zur Steuerung der Erregerfrequenz umfasst, die dazu dienen, die Erregerfrequenz zu steuern und zu verändern sowie das genannte Erregersignal (Ie) zur Erregung des Magnetkreises mit mindestens einer, von der ersten Erregerfrequenz (F1) abweichenden zweiten Erregerfrequenz (F2) zu liefern, wobei das genannte Auslösesignal dann ausgegeben wird, wenn das genannte, einen Differenzfehlerstrom abbildende Signal bei der Erregung mit der genannten ersten und danach mit der genannten zweiten Frequenz mindestens einen festgelegten Schwellwert überschreitet.

2. Einrichtung nach Anspruch 1, **dadurch gekennzeichnet, dass** die Erregerfrequenz-Steuermittel (9) die Erregerfrequenz verändern und dass die Verarbeitungseinheit dann ein Auslösesignal liefert, wenn mindestens ein Auslöseschwellwert bei einem Erregersignal überschritten wird, das nacheinander eine erste Erregerfrequenz (F1) und eine zweite Erregerfrequenz (F2) aufweist.

3. Einrichtung nach einem der Ansprüche 1 oder 2, **dadurch gekennzeichnet, dass** die Erregerfrequenz-Steuermittel (9) die Erregerfrequenz verändern und dass die Verarbeitungseinheit (1) dann ein Auslösesignal (13) liefert, wenn bei einem Erregersignal mit einer ersten Erregerfrequenz (F1) ein erster Auslöseschwellwert (SD1) und bei einem Erregersignal mit einer zweiten Erregerfrequenz (F2) ein zweiter Auslöseschwellwert (SD2) überschritten wird.

4. Einrichtung nach irgendeinem der Ansprüche 1 bis 3, **dadurch gekennzeichnet, dass** die Erregerfrequenz-Steuermittel (9) die Erregerfrequenz (F1, F2) periodisch verändern.

5. Einrichtung nach irgendeinem der Ansprüche 1 bis 3, **dadurch gekennzeichnet, dass** die Verarbeitungseinheit Auslösesteuermittel (12) umfasst, die dazu dienen, die Erregerfrequenz-Steuermittel (9) anzusteuern und die Erregerfrequenz von der ersten Frequenz (F1) auf die zweite Frequenz (F2) umzuschalten, wenn das genannte Differenzstrom-Fehlersignal (Id) bei einem Erregersignal mit der ersten Erregerfrequenz (F1) einen Auslöseschwellwert (SD, SD1) überschreitet, wobei ein Auslösesignal (13) dann ausgegeben wird, wenn das Differenzstrom-Fehlersignal (Id) bei einem Erregersignal mit der zweiten Erregerfrequenz (F2) einen Schwellwert (SD, SD2) überschreitet.

6. Einrichtung nach irgendeinem der Ansprüche 1 bis 5, **dadurch gekennzeichnet, dass** die Werte der ersten und der zweiten Erregerfrequenz (F1, F2) zwischen 2 Kilohertz und 10 Kilohertz liegen.

7. Einrichtung nach Anspruch 6, **dadurch gekennzeichnet, dass** die erste Erregerfrequenz (F1) einen Wert von 3 Kilohertz und die zweite Erregerfrequenz (F2) einen Wert von 4,4 Kilohertz aufweisen.

8. Elektrisches Schaltgerät mit Differenzstromschutz, das
- einen Differenzstrom-Messwandler (2) mit einer Sekundärwicklung (6),
- Hauptkontakte (14), die mit Hauptleitern (5) verbunden sind, welche eine Primärwicklung des genannten Messwandlers bilden,
- ein Auslöserelais (3) zur Abschaltung der Hauptkontakte sowie
- eine Differenzstrom-Schutzeinrichtung nach irgendeinem der Ansprüche 1 bis 7 umfasst, die ihrerseits eine Verarbeitungseinheit (1) mit einem an den Differenzstrom-Messwandler (2) angeschlossenen Eingang und einem an das Auslöserelais (3) angeschlossenen Ausgang zur Lieferung des Auslösesignals (13) sowie eine, mit einer Wicklung (6) des Messwandlers verbundene Erregerschaltung (7) zur Lieferung eines Erregersignals (Ie) mit einer ersten Erregerfrequenz (F1) umfasst, **dadurch gekennzeichnet, dass** die Erregerschaltung Mittel zur Ausgabe des genannten Erregersignals mit einer zweiten Erregerfrequenz (F2) umfasst, wobei das genannte Auslösesignal dann ausgegeben wird, wenn das genannte, einen Differenzfehlerstrom abbildende Signal bei Erregung mit der genannten ersten Frequenz und anschließender Erregung mit der genannten zweiten Frequenz mindestens einen festgelegten Schwellwert überschreitet.

9. Differenzstrom-Schutzverfahren mit einer Einrichtung nach Anspruch 1, **dadurch gekennzeichnet, dass** es
- einen ersten Verarbeitungsschritt (20), in dem die erste Erregerfrequenz (F1) zur Erregung eines Magnetkreises (4) eines Stromwandlers (2) zur Messung eines Differenzfehlerstroms (Id) ausgewählt wird,
- einen ersten Fehlererkennungsschritt (21), in dem ein durch Erregung mit der genannten ersten Frequenz erhaltener Differenzfehlerstrom (If) mit einem bestimmten Schwellwert verglichen wird,
- einen zweiten Verarbeitungsschritt (22), in dem mindestens eine zweite Erregerfrequenz (F2) zur Erregung des Magnetkreises (4) des Stromwandlers (2) zur Messung eines Differenzfehlerstroms (Id) ausgewählt wird,
- einen zweiten Fehlererkennungsschritt (23), in dem ein durch Erregung mit der genannten zweiten Frequenz erhaltener Differenzfehlerstrom (If) mit einem Schwellwert verglichen wird, sowie
- einen Auslöseschritt (24) umfasst, in dem ein Auslösesignal (13) ausgegeben wird, wenn ein Fehler im ersten Fehlererkennungsschritt (21) und anschließend im zweiten Fehlererkennungsschritt (23) durch Überschreiten des genannten festgelegten Schwellwerts erkannt wird.

10. Verfahren nach Anspruch 9, **dadurch gekennzeichnet, dass** der zweite Verarbeitungsschritt (22) und der zweite Fehlererkennungsschritt (23) durchgeführt werden, wenn im ersten Fehlererkennungsschritt (21) ein Fehler erkannt wird.
